# EUROPEAN PATENT APPLICATION

(11) **EP 1 533 726 A1**
(43) Date of publication of application: **25.05.2005**
(21) Application number: 03078562.0
(22) Date of filing: 16.11.2003
(51) Int. Cl.: G06F 17/60, G07F 19/00

(54) **Method of conducting payments for ordered goods that are to be shipped to the buyer, whereby financial settlement is delayed until a pre-determined delivery status occurs**

(71) Applicant: De Graeve, Wim, 7880 Vloesberg (BE)
(72) Inventor: De Graeve, Wim, 7880 Vloesberg (BE)

(57) **Abstract**

Method of conducting a payment for one or more goods ordered from a vendor by a buyer at a traditional point of sale, or remotely by way of telecommunications/datacommunications, using a credit facility in buyer's name at a financial institution, said method being characterised by the fact that a trusted third party (TTP) verifies, on behalf of the vendor, the authorisation and credit reservation for the payment of said ordered good(s) at the financial institution in question, and is further characterised by the fact that the financial settlement of the payment does not take place until it is triggered by information from the shipping company indicating that the ordered good(s) has/have reached a specific location during shipping to said delivery location, or indicating that the good(s) has/have been accepted at the preferred delivery location by or on behalf of the buyer, as agreed beforehand between buyer and vendor.

## Description

The present invention relates to a method of conducting a payment for one or more goods ordered from a vendor by a buyer at a traditional point of sale, or remotely by way of telecommunications and/or datacommunications means and networks, whereby buyer has a verifiable and sufficiently large credit facility at a financial institution at his disposal, whereby said credit facility offers the possibility to reserve a specific amount of credit upon reception of a payment request and to control the delay between authorisation of the payment request and the financial settlement of the payment, and whereby the ordered good(s) is/are to be shipped at a later point in time to a preferred delivery location as indicated by the buyer.

The well-known concept of "payment-on-delivery" has probably been used in commerce since the origin of commerce itself. Before the communication age, it was off course very convenient to be able to visit a local point of sale, like for instance a retail shop, select specific goods, have them shipped to your home, and pay for the goods to the person delivering them, most likely an employee of the vendor. The advantages are evident: one does not have to transport the goods home himself, and one does not have to have a large amount of cash on him when shopping. In most cases the financial risks and the costs of this concept can only be kept acceptable for the vendor if the deliveries are only made locally and if the value of the goods is relatively low. When a third party, like for instance a private shipping company, has to be hired to take care of the logistics and the collection of the payments, the time span between the goods leaving the vendor's warehouse and the crediting of the vendor's bank account with the collected payment often becomes too large, and the shipping costs and other costs, like insurances, often become too high to be economically feasible, especially for smaller-sized retail businesses. Also the fact that shipping companies have to make special arrangements to guarantee the security of their employees while collecting and transporting considerable amounts of money, adds to the costs of the payment-on-delivery concept. Especially when larger and/or heavier goods (refrigerators, washing machines, etc.) are involved, delivery will be unavoidable in most cases. In such cases many vendors will require a down payment or payment of the total sum in advance. In such cases the financial risk, or part of the financial risk is shifted towards the buyer. This situation is also not to be preferred, because the buyer has paid for the purchased goods, but he has no guarantee that he will ever receive them.
In the situation described above, a buyer places his order in person at a local point of sale. When an intermediate channel, like for instance mail, or a telecommunications or datacommunications network, is used to convey an order to a vendor, this is called "remote purchasing". One of the oldest forms of remote purchasing is probably the well-known concept of mail-ordering. According to this concept, a potential buyer selects goods from a catalogue and places an order for the goods by filling out an order form and sending it to the mail-order company by mail, or places his order by telephone or fax. When the buyer receives the ordered goods and an enclosed invoice, he will generally pay for the goods by bank transfer or credit card after a predetermined evaluation period. During said evaluation period the buyer generally has the possibility to return the goods without payment when he is not satisfied with them. Most of these mail-order companies offer their services only within the country where they are located and do not accept clients from abroad. From the point of view of the mail-order company, international remote purchasing clients mean higher costs for logistics and insurance, a higher risk of non-payment and higher costs in cases of non-payment. In addition to this, an international mail-order purchaser is generally required to perform international bank transfers which can be quite complicated, require in most cases reproduction of lengthy strings of numbers in writing and are, as such, prone to error. Alternatively the international mail-order purchaser is required to provide a party abroad (the mail-order company in question) with his credit card information by way of telephone, fax, mail etc. Research has shown that, especially outside the United States, people are quite reluctant to present their credit card data to a party abroad, by way of telecommunications and/or datacommunications means and networks. Demanding payment in advance in this situation brings about the same disadvantages as described earlier: the purchaser has to face the risk of non-delivery or delayed delivery of the ordered goods. To resolve problems in this respect may be extra difficult, because buyer and vendor may operate under different laws and regulations when they are located in different countries.
About a decade ago, a new form of remote purchasing emerged: "electronic commerce". The main reason for this was the fact that personal computers became more and more widely used among ordinary consumers. At the same time the network of computers and networks commonly known as the Internet, which was initially developed as a military and academic communications tool, developed into a global communications medium within reach of virtually every user of a personal computer worldwide. The explosive growth of the Internet and the availability of access thereto, has spurred efforts in adapting this medium for commercial purposes and in making it a "virtual global marketplace". Especially the development of the so-called "World-wide-web" and the software tools for navigating the World-wide-web, known as "browsers", have been instrumental in facilitating participation of ordinary consumers in electronic commerce (hereafter referred to as "e-commerce"). Currently a person wishing to purchase goods on the world-wide-web must navigate to a web-vendors website using his browser. After having selected the desired goods for purchase, the buyer is typically directed to an electronic form on the web-vendor's website to provide at least his name, address, email-address and credit card information for payment. One of the major advantages of e-commerce is the fact that a buyer is not limited to local vendors and their business hours, but can compare prices and select products and services offered by vendors worldwide, 24 hours per day, every day of the week. Another important advantage is the relative anonimity of conducting commerce over the Internet. Purchasing goods by way of a computer in the privacy of one's own home from a vendor abroad is very convenient for the majority of e-commerce users. Despite these advantages, e-commerce did not become the major commercial success that was expected ten years ago. The main reason for this is the fact that the added advantages of e-commerce have apparently not outweighed the disadvantages that are generally the same as described above for international remote purchasing with respect to mail-ordering:
- risks and costs of non-payment, late payment or fraudulent use and misuse of payment instruments like credit cards, are a heavy burden for web-vendors;
- to minimise their risks and costs involved in e-commerce, web-vendors generally demand payment in advance, which leads to a shift of (part of) the financial risks to the web-buyer's side, which is undesirable because there is no solid guarantee whatsoever that the latter will ever receive the goods that he has ordered and paid for;
- Because of the lack of other payment instruments that are secure and internationally accepted, web-buyers are generally forced to use one of the major credit cards to pay for their e-commerce purchases in advance. Although relevant progress has been made, there still is a lack of security measures deployed by web-vendors, and a lack of internationally standardised technical methods and protocols to prevent credit card fraud or misuse in e-commerce. This has made consumers, especially outside of the United States where credit card use is traditionally more widely accepted, reluctant to purchase goods and services online. At the same time this has made financial institutions, like for instance banks and credit card companies, reluctant to actively participate in e-commerce and assume part of the financial risks involved, which could boost e-commerce and remote purchases in general.

The abovementioned disadvantages have led to the following situation in the field of international remote purchasing (according to studies performed by the EU consumer organisation in July 2003):
- For 33% of all remote purchasing orders, some sort of problem occurs during delivery or financial settlement;
- Delivery times on average take 11 days, but the payment is debited on average already 5 days after placing of the remote purchasing order;
- There are no practical solutions for the financial handling of return shipments;
- Of all remote purchasing orders, 8% is never delivered to the buyer.

To remedy the abovementioned drawbacks of today's methods and protocols for handling payments in e-commerce and remote purchasing in general, numerous solutions have been proposed and laid down in the form of patents and other publications. The majority of these proposed solutions however merely focuses on solving the problems associated with remote purchasing of only one of the parties involved: buyer, seller or financial institution. What is really needed is a solution for conducting payments in remote purchasing, with the following features:
- Solution is acceptable and trusted by buyer, seller and financial institution;
- Solution can be applied on a global scale to all kinds of remote purchasing;
- Solution is easy accessible for all the parties involved;
- Solution is not costly;
- Solution offers a sufficient degree of security to all the parties involved.

It is the main objective of the invention described herein, to remedy the aforementioned problems with conducting payments in remote purchasing by proposing a payment method which attempts to implement at least the features enumerated above.

What is proposed is a method of conducting a payment for one or more goods ordered from a vendor by a buyer at a traditional point of sale, or remotely by way of telecommunications and/or datacommunications means and networks, whereby buyer has a verifiable and sufficiently large credit facility at a financial institution at his disposal, whereby said credit facility offers the possibility to reserve a specific amount of credit upon reception of a payment request and to control the delay between authorisation of the payment request and the financial settlement of the payment, and whereby the ordered good(s) is/are to be shipped at a later point in time to a preferred delivery location as indicated by the buyer, characterised by the fact that a trusted third party (TTP), or an electronic system under the control of said TTP verifies, on behalf of the vendor, the authorisation and credit reservation for the payment of said ordered good(s) at the financial institution in question, and further characterised by the fact that the financial settlement of the payment does not take place until it is triggered by information from the shipping company indicating that the ordered good(s) has/have reached a specific location during shipping to said delivery location, or indicating that the good(s) has/have been accepted at said preferred delivery location by or on behalf of the buyer, as agreed beforehand between buyer and vendor.
One crucial aspect of the method according to the invention is the introduction of a third party that is trusted by both the buyer and the vendor: a "trusted third party" (TTP). The TTP handles all aspects of the financial transaction involved, except for the actual financial settlement: the final debiting of the credit facility of the buyer and the final crediting of an account of the vendor. The fact that the TTP can negotiate with financial institutions like for instance the major credit card companies and banks on behalf of a large number of vendors may lead to a considerable reduction in the cost per transaction because of the principle of economies of scale. If the TTP is willing to accept part of the financial risk involved in the transactions, this can reduce said cost per transaction even more. It is furthermore to be expected that the presence of the TTP will lead to a concentration of expertise with respect to remote purchasing transactions, which could boost international standardisation and general acceptance of more secure technical methods and protocols for conducting e-commerce transactions and remote purchasing transactions in general.
Another crucial aspect of the method according to the present invention is the fact that the TTP verifies, on behalf of the vendor, the authorisation and credit reservation for the payment of said ordered good(s) at the financial institution in question, but the financial settlement of the payment is delayed until it is triggered by information from the shipping company indicating that the ordered good(s) has/have reached a specific location during shipping to said delivery location, or indicating that the good(s) has/have been accepted at said preferred delivery location by or on behalf of the buyer, as agreed beforehand between buyer and vendor. This means that the vendor can be assured before the ordered goods leave his premises, that the buyer has sufficient credit available and that part of this credit has been reserved for payment of the goods, but that he will not receive the payment until he has actually shipped the goods to the buyer. On the other hand the buyer is assured that payment for the goods is not debited from his account until the ordered good(s) has/have reached a specific location during shipping to his preferred delivery location, or that the good(s) has/have physically reached him and he as officially accepted them, as agreed beforehand between buyer and vendor.
The shipping of the goods is also arranged by the TTP, releaving the vendor of this costly logistical burden, and again leading to economies of scale with respect to shipping costs. This assures the vendor and the buyer that the shipping will only be handled by a shipping company that is certified by the TTP and thus adheres to certain standards of service.

The payment method according to the present invention is additionally characterised by the fact that it at least comprises the following steps:
(a) a buyer orders one or more goods from a vendor at a traditional point of sale, or remotely by way of telecommunications and/or datacommunications means and networks;
(b) said buyer presents to said vendor, or to an electronic system under control of said vendor, either at a traditional point of sale of the vendor, or from a remote location by way of telecommunications and/or datacommunications means and networks, sufficient information to enable authentication of a payment request from said buyer, chargeable to said credit facility in buyer's name at said financial institution;
(c) said vendor, or said electronic system under control of said vendor, forwards to said trusted third party (TTP), or to an electronic system under the control of said TTP, by way of telecommunications and/or datacommunications means and networks, said information enabling authentication of a payment request from said buyer, chargeable to said credit facility, together with, at least, the price of the ordered good(s) and the delivery location preferred by the buyer;
(d) said TTP, or an electronic system under the control of said TTP forwards to the financial institution in question, by way of telecommunications and/or datacommunications means and networks, said information enabling charging of the payment for said ordered good(s) to said credit facility, together with the price of the ordered good(s) and information identifying the vendor, and verifies whether payment of the price of the ordered good(s) is authorised and whether a credit reservation is made;
(e) if said payment is authorised and said credit reservation is made, the TTP, or an electronic system under the control of said TTP generates a unique order reference which is communicated to the buyer and the vendor by way of telecommunications and/or datacommunications means and networks, and stores the relevant order data as "reserved order";
(f) when the ordered good(s) is/are ready to be shipped to the buyer's preferred delivery location, the vendor communicates this fact to the TTP;
(g) the TTP, or an electronic system under the control of said TTP forwards at least the order reference and the buyer's preferred delivery location to a shipping company, informs said shipping company of the delivery status that is to be reported to trigger the financial settlement of the payment as agreed beforehand between buyer and vendor, and informs the buyer of at least the delivery date of the ordered good(s);
(h) the ordered good(s) is/are picked up by said shipping company at the vendor's premises for shipping to the buyer;
(i) the shipping company, or an electronic system under the control of the shipping company reports to the TTP when the ordered good(s) reach(es) a specific location during shipping to said delivery location, or when the good(s) has/have been accepted by or on behalf of the buyer at said preferred delivery location, as agreed beforehand between buyer and vendor;
(j) the TTP, or an electronic system under the control of the TTP triggers said financial settlement of the payment at said financial institution and the vendor eventually receives payment for the ordered good(s).

In a particular advantageous embodiment, the payment method according to the present invention is characterised by the fact that the telecommunications and/or datacommunications means and networks as mentioned in the aforementioned steps (a) and (b) comprise computer equipment suitable for use of the Internet. This applies to the use of e-commerce by means of for instance a personal computer equipped with a modem for establishing an Internet connection and visiting websites of web-vendors.

In yet another advantageous embodiment, the payment method according to the present invention is characterised by the fact that the telecommunications and/or datacommunications means and networks as mentioned in the aforementioned steps (a) and (b) comprise equipment and networks for mobile communications. This applies to the use of e-commerce by means of for instance a mobile telephone equipped with suitable software and hardware to establish a mobile Internet connection and visit websites and/or WAP-(Wireless Access Protocol)sites of web-vendors.

The payment method according to the present invention may further be characterised by the fact that the telecommunications and/or datacommunications means mentioned in the aforementioned step (b) comprise electronic equipment for reading information stored in a card-shaped information carrier. When a buyer orders goods in person at a local point of sale, for instance a retail shop, said electronic equipment may for instance be a known apparatus suitable for reading out digital data stored in a chip or a magnetic stripe on for instance a credit card, and equipped with a keyboard for entering for instance a PIN-(Personal Identification Number)code for authentication purposes. In case goods are ordered remotely, said electronic equipment may for instance be a known apparatus, connected to buyer's personal computer, suitable for reading out digital data stored in a chip or a magnetic stripe on for instance a credit card.

Although not explicitly mentioned in the claims of this patent application, it may be evident to the reader that for the mentioned electronic systems under the control of the TTP, state-of-the-art equipment will be used, and that for the communications between the TTP and the financial institution, and between the TTP and the selected shipping company, equipment and protocols will be used that offer a degree of security that is acceptable to all the parties involved.

In a further advantageous embodiment of the payment method according to the present invention, said information enabling authentication of a payment request from said buyer, chargeable to said credit facility in buyer's name at said financial institution, is stored in a card-shaped information carrier that is specifically dedicated to conducting payments according to the method of the present invention. This enables for instance the use of a standardised chipcard for conducting payments according to the method of the present invention, which may eliminate compatibility problems caused by the use of a multitude of different credit cards and direct debit cards.

In a particular advantageous embodiment, the payment method according to the present invention is characterised by the fact that in the aforementioned step (i) the electronic system under the control of the shipping company that reports to the trusted third party when the ordered good(s) reach(es) a specific location during shipping to said delivery location, comprises an electronic tracking system suitable for determining the geographical location of the ordered good(s) during shipment. This may provide the parties involved with accurate information concerning the location of the good(s), enables fast resolving of delivery problems, and thus creates a higher degree of mutual confidence between said parties.

In another advantageous embodiment of the payment method according to the invention, the buyer acknowledges acceptance of the goods at delivery by making known to the shipping company a delivery acknowledgement reference, which was sent to the buyer earlier by the TTP. This provides for an extra authentication, because the TTP will only send said delivery acknowledgement reference to the buyer and not to any of the other involved parties.

According to the payment method of the present invention, said verifiable credit facility may for instance be a credit card account, a bank account or an account specifically dedicated to conducting payments according to the method of the present invention. In case said verifiable credit facility is a credit card account or a bank account, a part of the total credit associated with the account may be specifically allocated for conducting payments according to the method of the present invention. This provides buyers with the possibility to separate credit for remote purchasing transactions, from credit for traditional credit card transactions or traditional direct-debit transactions. Because of the higher risk of remote purchasing transactions, buyers may choose to allocate only a small portion of their total credit for conducting payments according to the method of the present invention.

According to the present invention, said trusted third party and said financial institution may advantageously be or belong to one and the same corporate entity. This may offer considerable advantages because many financial institutions already have high-security worldwide networks at their disposal for conducting financial transactions. In addition to this, many banks offer for instance lease programs for card-reading equipment that is already certified to use a specific network for financial transactions.

According to the present invention, said trusted third party and said shipping company may advantageously be or belong to one and the same corporate entity. This may offer considerable advantages because many of the major international shipping companies already have worldwide networks at their disposal for tracking and tracing goods that are in transit.

The payment method according to the present invention can easily be adapted to the well-known traditional INCOTERMS (International Commercial Terms, published by the International Chamber of Commerce) with direct payment:

When buyer and vendor agree on delivery "ex-works", said financial settlement of said payment is, according to the payment method of the present invention, triggered when said ordered good(s) leave(s) the vendor's premises. According to the official INCOTERM "EXW" (Ex Works) the vendor is assumed to have delivered goods to a buyer when he places them at the disposal of said buyer at the vendor's premises. In that case the buyer has to bear the costs and risks of the shipment from the vendor's premises to the buyer's preferred delivery location.

When buyer and vendor agree on delivery "free on board", said financial settlement of said payment is, according to the payment method of the present invention, triggered when said ordered good(s) leave(s) the customs office premises of the country where the good(s) left the vendor's premises. According to the official INCOTERM "FOB" (Free On Board) the vendor is assumed to have delivered goods to a buyer when they have been loaded onto/into a transport means after having been cleared for export. In that case the buyer has to bear the costs and risks of shipment from that location to his preferred delivery location.

When buyer and vendor agree on delivery "franco", said financial settlement of said payment is, according to the payment method of the present invention, triggered when said ordered good(s) is/are delivered at the buyer's preferred delivery location. According to the equivalent official INCOTERM "DDP" (Delivered Duty Paid) the vendor is assumed to have delivered goods to a buyer when the good(s) arrive(s) at the buyer's preferred delivery location, cleared for import and all duties and taxes paid. In this case the vendor has to bear all costs and risks of shipment to the buyer's preferred delivery location.

It may be clear to the reader that the abovementioned delivery conditions "ex works" and "free on board", according to the payment method of the present invention, will mainly apply to international business-to-business transactions and rarely to international business-to-consumer transactions.

A further advantageous embodiment of the payment method according to the present invention is characterised by the fact that said triggering of said financial settlement of said payment is delayed for a predetermined period of time after delivery of the good(s) at the buyer's preferred delivery location, thus providing for a guarantee period during which the buyer can return the good(s) without payment if he is not satisfied. Such a guarantee period is an integral part of consumer law in many countries and is one of the most important prerogatives of a consumer in business-to-consumer transactions.

The above and other objects, features and advantages of the present invention will be more clearly understood from the following description of a particular embodiment of the method according to the present invention, which is merely meant to illustrate a practical application of the invention and not, whatsoever, to limit the range of application of the invention. The following description is to be taken in conjunction with the accompanying drawings, in which:

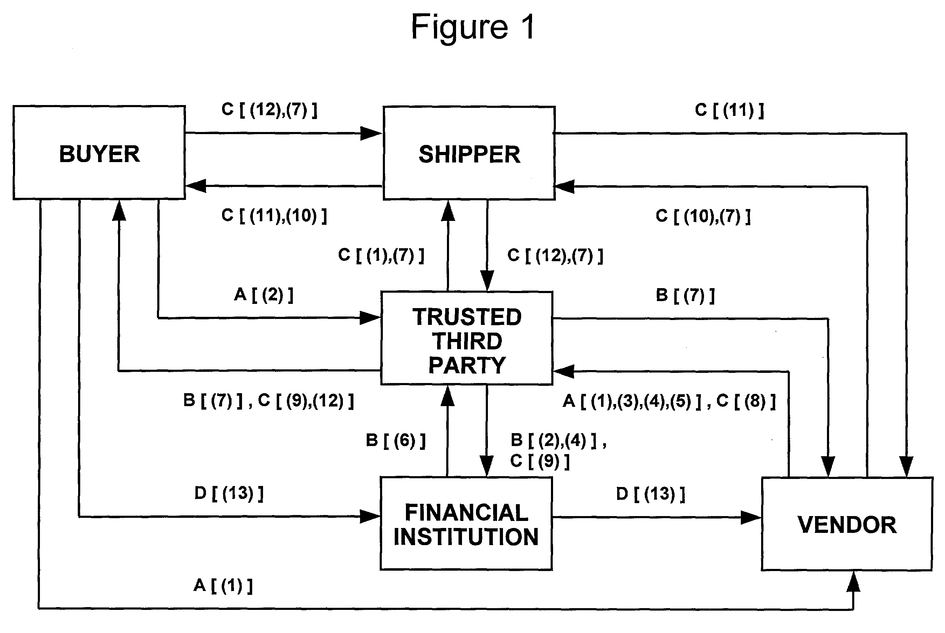

Figure 1 is a schematic diagram showing the flows of goods, information and payments within a particular embodiment of the payment method according to the present invention. The procedure is shown in the figure as a chronologically ordered series of phases A, B, C, etc. The goods, information and payments that are transferred between the parties involved, are sequentially numbered (1), (2), (3), etc. If for instance goods, information and/or payments (1) and (3) are transferred during phase A this will be denoted as A[(1),(3)].

The buyer in figure 1 is a consumer living in Belgium, who is navigating the Internet in search of a supplier of a specific spare part for his laser printer. Eventually he finds a web-vendor in the UK that offers the spare part for a good price. Said vendor offers the service of paying by creditcard, with delay of the financial settlement until the ordered item has been delivered at the buyer's address and has been accepted by the buyer. The buyer navigates to a page on the vendor's website describing details of the payment procedure. The buyer is holder of one of the major credit cards and, because he is a regular e-commerce user, he has decided recently to have his credit card enabled for use of the payment method according to the present invention, and has allocated a limited amount of credit for e-commerce payments conducted according to said method. Having read the details about the payment procedure, the buyer decides to place an order for the spare part with the particular vendor. During phase A (ordering), the buyer supplies his name, address and personal contact information by means of an electronic form on a secured page of the vendor's website, and is then redirected to a secured page to supply his credit card data. This page is maintained by a trusted third party (TTP) that handles the payment procedure and the shipment of goods for the vendor. In this case this trusted third party is a well-known international shipping company. The buyer judges this company to be trustworthy and proceeds by filling out an electronic form with his credit card data. This form, or the webpage whereon it is located, are not physically present on any computer system under the control of the vendor. The supplied credit card data is only sent to a computer system of the TTP. Upon completion of the form, the buyer is presented with an overview of the price of the ordered item, applicable taxes and the extra charge for the transaction and the shipping. If the buyer is satisfied with this, the data (1) of the personal information form, the data (2) of the credit card data form, the total price (3) of the order, information (4) identifying the vendor and information (5) identifying an account of the vendor that is to be credited upon completion of the financial settlement, are sent to the TTP, in encrypted form. The vendor stores the order data together with the data (1) of the personal information form. The stored order data at least comprises date and time of the order, a specification of the ordered item(s), applicable taxes and the extra charge for the transaction and the shipping. During phase B (authentication, authorisation and credit reservation), the TTP forwards a request for payment with delayed settlement, together with the buyer's credit card data (2) from said credit card information form and said vendor information (4), in encrypted form, to the financial institution that issued the buyer's credit card. The financial institution authenticates the credit card data, reserves an amount of credit equal to the order price, and acknowledges the credit reservation by returning a unique transaction reference (6) to the TTP. Now the TTP generates a unique reference (7) for the order and stores the relevant order data and the transaction reference as "reserved order". For reasons of security, the stored order data does not include the buyer's credit card data. As mentioned earlier, this credit card data is only forwarded by the TTP to the financial institution and does not remain in the TTP's systems. Ultimately, the transaction reference (6), which is only known to the TTP and the financial institution, will serve as the trigger for the financial settlement of the payment. The TTP sends the order reference (7) to the buyer and the vendor, for instance by electronic mail or SMS (Short Message Service). During phase C (shipping), the vendor sends a message (8) to the TTP, indicating that the order is ready for shipment to the buyer. The TTP, which is also the shipping company for the sake of this description, arranges pick-up of the ordered laser printer spare part at the vendor's premises, and sends a message (9) containing the expected delivery date, to the buyer. Let us assume that in this case the delivery will be "franco home" (equivalent INCOTERM: Delivered Duty Paid (DDP)). The shipping company arranges for the clearance for export from the UK and the clearance for import into Belgium. When the ordered item (10) is in transit, the buyer and the vendor may use the order reference (7) to log into the shipping company's tracking and tracing system to check the current location (11) of the shipment. Let us assume that the buyer did receive a delivery acknowledgement reference (12) from the TTP for extra authentication and security. When the ordered item (10) is delivered at the address of the buyer, the latter has the opportunity to conduct a short inspection of the received item. If the buyer concludes that the item received is indeed the ordered item, and the item apparently suffered no damage, he makes the delivery acknowledgement reference (12) known to the delivery person of the shipping company, who sends this reference, together with the order reference (7), to the TTP, by way of, for instance, an hand-held mobile terminal and the shipping company's mobile data network. During phase D (financial settlement), the TTP uses said delivery acknowledgement reference (12) and said order reference (7) to look up the corresponding transaction reference (9). Now the transaction reference (9) is sent to the financial institution by the TTP and the financial settlement of the corresponding credit card payment is triggered. This means that the buyer's credit card account is debited for the total order price and an account of the vendor is credited with the same amount. In figure 1 this is shown symbolically in the form of an amount (13), equal to the total order price, that is transferred from the buyer to the vendor by way of the financial institution.

## Claims

1. Method of conducting a payment for one or more goods ordered from a vendor by a buyer at a traditional point of sale, or remotely by way of telecommunications and/or datacommunications means and networks, whereby buyer has a verifiable and sufficiently large credit facility at a financial institution at his disposal, whereby said credit facility offers the possibility to reserve a specific amount of credit upon reception of a payment request and to control the delay between authorisation of the payment request and the financial settlement of the payment, and whereby the ordered good(s) is/are to be shipped at a later point in time to a preferred delivery location as indicated by the buyer,
**characterised by** the fact that a trusted third party (TTP), or an electronic system under the control of said TTP verifies, on behalf of the vendor, the authorisation and credit reservation for the payment of said ordered good(s) at the financial institution in question, and further **characterised by** the fact that the financial settlement of the payment does not take place until it is triggered by information from the shipping company indicating that the ordered good(s) has/have reached a specific location during shipping to said delivery location, or indicating that the good(s) has/have been accepted at said preferred delivery location by or on behalf of the buyer, as agreed beforehand between buyer and vendor.

2. Payment method according to claim 1,
**characterised by** the fact that said method according to the invention at least comprises the following steps:
(a) a buyer orders one or more goods from a vendor at a traditional point of sale, or remotely by way of telecommunications and/or datacommunications means and networks;
(b) said buyer presents to said vendor, or to an electronic system under control of said vendor, either at a traditional point of sale of the vendor, or from a remote location by way of telecommunications and/or datacommunications means and networks, sufficient information to enable authentication of a payment request from said buyer, chargeable to said credit facility in buyer's name at said financial institution;
(c) said vendor, or said electronic system under control of said vendor, forwards to said trusted third party (TTP), or to an electronic system under the control of said TTP, by way of telecommunications and/or datacommunications means and networks, said information enabling authentication of a payment request from said buyer, chargeable to said credit facility, together with, at least, the price of the ordered good(s) and the delivery location preferred by the buyer;
(d) said TTP, or an electronic system under the control of said TTP forwards to the financial institution in question, by way of telecommunications and/or datacommunications means and networks, said information enabling charging of the payment for said ordered good(s) to said credit facility, together with the price of the ordered good(s) and information identifying the vendor, and verifies whether payment of the price of the ordered good(s) is authorised and whether a credit reservation is made;
(e) if said payment is authorised and said credit reservation is made, the TTP, or an electronic system under the control of said TTP generates a unique order reference which is communicated to the buyer and the vendor by way of telecommunications and/or datacommunications means and networks, and stores the relevant order data as "reserved order";
(f) when the ordered good(s) is/are ready to be shipped to the buyer's preferred delivery location, the vendor communicates this fact to the TTP;
(g) the TTP, or an electronic system under the control of said TTP forwards at least the order reference and the buyer's preferred delivery location to a shipping company, informs said shipping company of the delivery status that is to be reported to trigger the financial settlement of the payment as agreed beforehand between buyer and vendor, and informs the buyer of at least the delivery date of the ordered good(s);
(h) the ordered good(s) is/are picked up by said shipping company at the vendor's for shipping to the buyer;
(i) the shipping company, or an electronic system under the control of the shipping company reports to the TTP when the ordered good(s) reach(es) a specific location during shipping to said delivery location, or when the good(s) has/have been accepted by or on behalf of the buyer at said preferred delivery location, as agreed beforehand between buyer and vendor;
(j) the TTP, or an electronic system under the control of the TTP triggers said financial settlement of the payment at said financial institution and the vendor eventually receives payment for the ordered good(s).

3. Payment method according to claim 2,
**characterised by** the fact that the telecommunications and/or datacommunications means and networks mentioned in step (a) and step (b) of said claim comprise computer equipment suitable for use of the Internet.

4. Payment method according to claim 2,
**characterised by** the fact that the telecommunications and/or datacommunications means and networks mentioned in step (a) and step (b) of said claim comprise equipment and networks for mobile communications.

5. Payment method according to claim 2,
**characterised by** the fact that the telecommunications and/or datacommunications means mentioned in step (b) of said claim comprise electronic equipment for reading information stored in a card-shaped information carrier.

6. Payment method according to claim 2,
**characterised by** the fact that said information enabling authentication of a payment request from said buyer, chargeable to said credit facility in buyer's name at said financial institution, is stored in a card-shaped information carrier that is specifically dedicated to conducting payments according to the method of the present invention.

7. Payment method according to claim 2,
**characterised by** the fact that in step (i) of said claim the electronic system under the control of the shipping company that reports to the trusted third party when the ordered good(s) reach(es) a specific location during shipping to said delivery location, comprises an electronic tracking system suitable for determining the geographical location of the ordered good(s) during shipment.

8. Payment method according to claim 1 or 2,
**characterised by** the fact that the buyer acknowledges acceptance of the goods at delivery by making known to the shipping company a delivery acknowledgement reference, which was sent to the buyer earlier by the TTP.

9. Payment method according to claim 1 or 2,
**characterised by** the fact that said verifiable credit facility is a credit card account, a bank account or an account specifically dedicated to conducting payments according to the method of the present invention.

10. Payment method according to claim 9,
**characterised by** the fact that, in case the said verifiable credit facility is a credit card account or a bank account, a part of the total credit associated with the account is specifically allocated for conducting payments according to the method of the present invention.

11. Payment method according to claim 1 or 2,
**characterised by** the fact that said trusted third party and said financial institution are or belong to one and the same corporate entity.

12. Payment method according to claim 1 or 2,
**characterised by** the fact that said trusted third party and said shipping company are or belong to one and the same corporate entity.

13. Payment method according to claim 1 or 2,
**characterised by** the fact that when buyer and vendor agree on delivery "ex-works", said financial settlement of said payment is triggered when said ordered good(s) leave(s) the vendor's premises.

14. Payment method according to claim 1 or 2,
**characterised by** the fact that when buyer and vendor agree on delivery "free-on-board", said financial settlement of said payment is triggered when said ordered good(s) leave(s) the customs office of the country where the good(s) left the vendor's premises.

15. Payment method according to claim 1 or 2,
**characterised by** the fact that when buyer and vendor agree on delivery "franco", said financial settlement of said payment is triggered when said ordered good(s) are delivered at the buyer's preferred delivery location.

16. Payment method according to one of the preceding claims,
**characterised by** the fact that said triggering of said financial settlement of said payment is delayed for a predetermined period of time after delivery of the good(s) at the buyer's preferred delivery location, thus providing for a guarantee period during which the buyer can return the good(s) without payment if he is not satisfied.
